# EUROPÄISCHE PATENTSCHRIFT

(11) **EP 1 669 713 B1**
(45) Veröffentlichungstag und Bekanntmachung des Hinweises auf die Patenterteilung: **06.05.2009**
(21) Anmeldenummer: 05022323.9
(22) Anmeldetag: 13.10.2005
(51) Int. Cl.: G01B 7/012, G01B 21/04

(54) **Verfahren und Vorrichtung zum Trennen der mechanischen Verbindung zwischen einer Taststiftaufnahme und einem Tastkopf**
Method and device for breaking the mechanical connection between a stylus retainer and a scanning head
Procédé et dispositif de séparation d'une liaison mécanique entre un logement de palpeur et une tête de palpage

(30) Priorität: 10.12.2004 DE 102004059468
(43) Veröffentlichungstag der Anmeldung: 14.06.2006
(73) Patentinhaber: Hexagon Metrology GmbH, 35578 Wetzlar (DE)
(72) Erfinder: Habermehl, Heinz-Eckhard, 35341 Lauterbach (DE); Heiderich, Jens, 35745 Herborn (DE)
(74) Vertreter: Knefel, Cordula

(56) Entgegenhaltungen:
- US-A- 5 404 649
- US-A- 6 012 230

## Beschreibung

Die Erfindung betrifft ein Verfahren zum Trennen der mechanischen Verbindung zwischen einer Taststiftaufnahme und einem Tastkopf sowie eine Vorrichtung zum Trennen der mechanischen Verbindung zwischen einer Taststiftaufnahme und einem Tastkopf.

Gemäß dem Stand der Technik sind Taststiftaufnahmen an einem Tastkopf einer Koordinatenmessmaschine trennbar befestigt und weisen hierzu eine mechanische Verbindung auf, die es erlaubt, unterschiedliche Tasterkonfigurationen automatisch einzuwechseln. Dies spart Messzeit ein und erhöht das Spektrum der möglichen Messaufgaben.

Zum Stand der Technik (DE 200 06 504 U1) gehört ein Tastkopf mit auswechselbarer Tasterkombination, die an einer Taststiftaufnahme angeordnet ist. Die Taststiftaufnahme sitzt in drei Präzisionslagern einer Taststiftaufnahmehalterung des Tastkopfes. An der Taststiftaufnahme sind entsprechende Gegenlager zu den Präzisionslagern angeordnet. Die Lagerkomponenten an der Taststiftaufnahme bestehen zum Beispiel aus Kugeln und setzen sich in die Präzisionslager am Tastkopf, wobei sie mit diesen eine kinematisch bestimmte mechanische Verbindung eingehen. Eine Haltevorrichtung im Tastkopf zieht die Lagerkomponenten der Taststiftaufnahme mit einer definierten Kraft in die Gegenlager des Tastkopfes. Diese Art Lagerung erlaubt einen sehr präzisen und hoch reproduzierbaren Sitz der Taststiftaufnahme am Tastkopf. Dies ist zwingend nötig, um bei Messungen mit unterschiedlichen Tasterkonfigurationen Bezüge zwischen ihnen bilden zu können. In die Taststiftaufnahme werden die benötigten Tasterkonfigurationen eingeschraubt.

Zum Stand der Technik (DE 692 21 896 T2) gehört darüber hinaus ein Tastkopf, an dem eine Taststiftaufnahme mittels magnetischer Elemente lösbar befestigt ist. Diese zum Stand der Technik gehörende Vorrichtung hat den Nachteil, dass zum Lösen der Taststiftaufnahme von dem Tastkopf relativ große Kräfte aufgebracht werden müssen, um die Haltekraft der magnetischen Elemente zu überwinden. Bei der Verwendung von langen, auskragenden Tastern (Länge größer 100 Millimeter) wirken bei der Antastung oder durch ihr Gewicht Drehmomente, die die Taststiftaufnahme aus ihrem Lagersitz heben, indem sie der Haltekraft entgegenstehen. Um diese Drehmomente abzufangen, sind entsprechende Haltekräfte erforderlich, die beim Trennen von Taststiftaufnahme und Tastkopf überwunden werden müssen.

Dieses Problem versucht die US 6,012,230 A dadurch zu lösen, dass Hebelübersetzungen vorgesehen sind, die die Trennkraft verstärken (Fig. 8). Diese Lösung ist jedoch umständlich und kostenintensiv.

In der EP 0 128 464 B1 wird vorgeschlagen, die mechanische Verbindung zum Beispiel durch einen Elektromagneten zu lösen, wobei der Elektromagnet im Tastkopf sitzt und bei Bestromung das Feld des Haltemagneten kompensiert.

Die Anordnung von Elektromagneten hat jedoch den Nachteil, dass die Elektromagnete im Tastkopf viel Platz benötigen und sich durch die notwendige Bestromung erwärmen, was wegen der endlichen Ausdehnungskoeffizienten der im Tastkopf verwendeten Materialien zu unerwünschten Deformationen führt. Durch diese aufwändige Konstruktion werden die Tastköpfe darüber hinaus relativ teuer.

Eine andere Art der Trennung stellt das Abreißen der mechanischen Verbindung dar. Die Taststiftaufnahme wird hierzu in einer Haltevorrichtung angeordnet, während die Koordinatenmessmaschine den Tastkopf von der Haltevorrichtung wegbewegt und dabei die mechanische Verbindung abreißt. Die hierbei aufzubringenden Kräfte richten sich nach der Haltekraft des oder der Permanentmagnete. Dieses zum Stand der Technik gehörende Verfahren hat den Nachteil, dass relativ große Kräfte aufgebracht werden müssen.

Beim Lösen der mechanischen Verbindung durch Abreißen muss eine Kraft auf die mechanische Verbindung aufgebracht werden, die größer als die Haltekraft der Magnete ist.

Diese Kraft wird über den Tastkopf und seine beweglichen Teile geleitet und bedeutet eine hohe mechanische Beanspruchung.

Zum Stand der Technik (US 5,174,690 A) gehört ein Werkzeug, welches an einem Werkstück mittels Magnetkraft befestigt wird, Zum Lösen des Magneten ist eine Vorrichtung vorgesehen, mittels der durch Drehen einer Schraube der Magnet einseitig von dem Werkstück abgehoben wird.

Weiterhin gehört zum Stand der Technik (DE 36 43 350 A1) ein Magnetverschluss, bei dem in einem Permanentmagneten ein Loch in ovaler anstatt kreisförmiger Gestalt mit einem längeren Durchmesser in der einen Richtung vorgesehen ist, so dass ein aus ferromagnetischem Material gefertigter Vorsprung leichter in der Längsrichtung als in Richtung des kürzeren Durchmessers bewegt und auch geneigt oder gekippt werden kann.

Zum Stand der Technik (US 5,404,649 A) gehört darüber hinaus ein Taststift, der mittels Magnetkraft am Tastkopf angeordnet ist. Die Magnetverbindung ist vorgesehen, damit ein Verkippen des Taststiftes gegenüber dem Tastkopf möglich ist, wenn eine Kollision des Taststiftes auftritt. Der Taststift kann hierdurch ausgelenkt werden, ohne dass der Tastkopf einen Schaden nimmt.

Das der Erfindung zugrunde liegende technische Problem besteht darin, ein Verfahren sowie eine Vorrichtung zum Lösen einer Taststiftaufnahme von einem Tastkopf anzugeben, bei der die Taststiftaufnahme und der Tastkopf mittels einer magnetischen Haltekraft lösbar miteinander verbunden sind, und bei der die Kräfte zur Überwindung der Haltekraft deutlich geringer als die Haltekraft selbst sind.

Dieses technische Problem wird durch ein Verfahren mit den Merkmalen gemäß Anspruch 1 sowie durch eine Vorrichtung mit den Merkmalen gemäß Anspruch 3 gelöst.

Dadurch, dass gemäß dem erfindungsgemäßen Verfahren zum Trennen der mechanischen Verbindung zwischen einer Taststiftaufnahme von einem Tastkopf, wobei die Haltekraft zur Fixierung der Taststiftaufnahme am Tastkopf von wenigstens einem Magneten aufgebracht wird, beim Trennen eine Symmetrieachse der Taststiftaufnahme und eine Symmetrieachse des Tastkopfes zueinander verkippt werden, verringert sich die aufzubringende Kraft zum Trennen der mechanische Verbindung. Bei einer Kippbewegung ist bei geeigneter Anordnung des oder der Haltemagnete aufgrund der wirkenden Hebelverhältnisse immer eine geringere Kraft zum Lösen notwendig als bei einem zentralen Abreißen.

Die Taststiftaufnähme ist während des Lösens von dem Tastkopf in einer Haltevorrichtung angeordnet, die die Taststiftaufnahme mit der zugehörigen Tasterkonfiguration nach Abschluss des Trennvorgang zum Wiedereinwechseln bereithält.

Gemäß dem erfindungsgemäßen Verfahren wird die Taststiftaufnahme in die Haltevorrichtung gefahren. Anschließend wird der Tastkopf von der Haltevorrichtung wegbewegt, so dass die Taststiftaufnahme an einem ersten Anschlagpunkt, einer ersten Anschlagkante oder einer ersten Anschlagfläche zur Anlage kommt. Beim Weiterbewegen des Tastkopfes in der ursprünglichen Bewegungsrichtung, das heißt von der Haltevorrichtung weg, bewegt sich eine freie Seite der Taststiftaufnahme mit dem Tastkopf mit, während die andere Seite an dem Anschlagpunkt, der Anschlagkante oder der Anschlagfläche anliegt. Hierdurch wird die Taststiftaufnahme verkippt, bis die freie Seite der Taststiftaufnahme an einem zweiten Anschlagpunkt, einer zweiten Anschlagkante oder einer zweiten Anschlagfläche anschlägt, wodurch sich die Taststiftaufnahme und der Tastkopf voneinander lösen.

Das erfindungsgemäße Verfahren zeichnet sich dadurch aus, dass eine wesentlich geringere Kraft zum Lösen der Taststiftaufnahme von dem Tastkopf aufzubringen ist als bei den zum Stand der Technik gehörenden Verfahren, bei denen ein zentrales Abreißen in senkrechter Richtung erfolgt.

Die erfindungsgemäße Vorrichtung weist wenigstens zwei Anschlagpunkte und/oder wenigstens zwei Anschlagkanten und/oder wenigstens zwei Anschlagflächen auf, die in Richtung der Symmetrieachse der Taststiftaufnahme, zu der der Tastkopf parallel von der Haltevorrichtung der Taststiftaufnahme wegbewegt wird, verschiedene Höhen aufweisen, so dass die Taststiftaufnahme erst mit einer ersten Seite und anschließend bei Weiterbewegung des Tastkopfes mit einer zweiten Seite an den Anschlagpunkten, -kanten oder -flächen zum Anliegen kommt.

Gemäß einer besonders bevorzugten Ausführungsform der erfindungsgemäßen Vorrichtung sind die wenigstens zwei Anschlagpunkte und/oder -kanten und/oder -flächen diametral gegenüberliegend in der Haltevorrichtung für die Taststiftaufnahme angeordnet. Hierdurch ist gewährleistet, dass zwischen dem Anschlag an der Taststiftaufnahme an den zwei Anschlagpunkten, -kanten oder -flächen eine möglichst große Verkippung der Taststiftaufnahme erfolgt, wodurch gewährleistet ist, dass die Kraft zum Lösen der mechanischen Verbindung zwischen Taststiftaufnahme und Tastkopf am geringsten ist.

Gemäß einer weiteren vorteilhaften Ausführungsform wird die Haltekraft, die die Taststiftaufnahme mit dem Tastkopf verbindet, von drei Magneten aufgebracht, die so an der mechanischen Verbindung zwischen Tastkopf und Taststiftaufnahme angebracht sind, dass beim Lösen durch Verkippen zunächst nur ein Magnet von seinem gegenüberliegenden Bauteil entfernt wird, weil die beiden anderen Magnete so angeordnet sind, dass die gedachte Verbindungslinie zwischen ihnen so zwischen dem ersten Magneten und der Kippachse liegt, dass die Entfernung zwischen dem ersten Magneten und der gedachten Verbindungslinie zwischen den beiden anderen Magneten größer ist als die Entfernung zwischen der gedachten Verbindungslinie zwischen den beiden anderen Magneten und der Kippachse, was dazu führt, dass dieses Entfernungsverhältnis wie eine Hebelübersetzung wirkt.

Im weiteren Verlauf der Kippbewegung öffnet sich der Winkel zwischen den beiden letztgenannten Magneten und ihren Gegenstücken, so dass auch die hierzu notwendigen Kräfte deutlich geringer sind als beim Lösen ohne Kippbewegung.

Die Haltevorrichtung für die Taststiftaufnahme weist gemäß einer weiteren vorteilhaften Ausführungsform wenigstens einen Auflagepunkt für die Taststiftaufnahme auf. Gemäß einer weiteren vorteilhaften Ausführungsform ist zusätzlich in der Haltevorrichtung wenigstens ein Magnet für die Fixierung der Taststiftaufnahme in der Haltevorrichtung angeordnet, um einen sicheren Sitz zu gewährleisten und Verschiebungen bei hohen Drehmomenten zu verhindern, die dadurch auftreten, dass eine weit auskragende Tasterkombination an der Taststiftaufnahme angebracht ist. Vorteilhaft sind Gegenstücke zu den Permanentmagneten, das heißt Gegenstücke beispielsweise aus ferromagnetischem Material in der Taststiftaufnahme angeordnet. Damit ist sichergestellt, dass die Taststiftaufnahme beim erneuten Einwechseln in den Tastkopf an der gleichen Stelle in der Haltevorrichtung liegt und reproduzierbar in die Lager des Tastkopfes eingesetzt werden kann.

Auch diese magnetischen Verbindungen können leicht durch Abreißen gelöst werden, wenn eine Taststiftaufnahme in den Tastkopf eingewechselt wird. Hier werden wesentlich kleinere Kräfte benötigt als zur Fixierung der Taststiftaufnahme am Tastkopf, weil lediglich ein Herausfallen aus der Haltevorrichtung verhindert werden muss.

Gemäß einer weiteren besonders bevorzugten Ausführungsform ist an der Haltevorrichtung für die Taststiftaufnahme ein Stift angebracht, der beim Ablegen der Taststiftaufnahme in der Haltevorrichtung in eine in der Taststiftaufnahme angebrachte Hülse eintaucht und auf diese Weise ein Drehmoment, das durch eine stark auskragende Taststiftkombination erzeugt wird, abfängt und dadurch verhindert, dass die Taststiftaufnahme zusammen mit der Taststiftkombination aus der Haltevorrichtung herausfällt. Am Ende dieser Hülse ist vorteilhaft ein Magnet angebracht, der die Taststiftaufnahme in ihrer Position in der Haltevorrichtung festhält.

Gemäß einer weiteren vorteilhaften Ausführungsform der Erfindung ist der wenigstens eine Auflagepunkt für die Taststiftaufnahme mit einer reibungserhöhenden Schicht, beispielsweise aus Gummi belegt. Auch hierdurch wird der Sitz der Taststiftaufnahme in der Haltevorrichtung verbessert, da die Taststiftaufnahme schwerer in der Haltevorrichtung verschiebbar ist.

Weitere Merkmale und Vorteile der Erfindung ergeben sich anhand der zugehörigen Zeichnung, in der mehrere Ausführungsbeispiele einer erfindungsgemäßen Vorrichtung nur beispielhaft dargestellt sind. In der Zeichnung zeigen:
Fig. 1 einen Tastkopf mit Taststiftaufnahme in einer Haltevorrichtung in perspektivischer Ansicht;
Fig. 2 ein geändertes Ausführungsbeispiel einer Haltevorrichtung für eine Taststiftaufnahme im Querschnitt;
Fig. 3 einen Tastkopf mit einer mittels mehrerer Magneten gehaltenen Taststiftaufnahme in Ansicht;
Fig. 4 eine Haltevorrichtung mit Taststiftaufnahme in perspektivischer Ansicht mit eingezeichneter Kippachse;
Fig. 5 ein geändertes Ausführungsbeispiel einer Haltevorrichtung in perspektivischer Ansicht;
Fig. 6 eine in der Haltevorrichtung der Fig. 5 angeordnete Taststiftaufnahme im Längsschnitt.

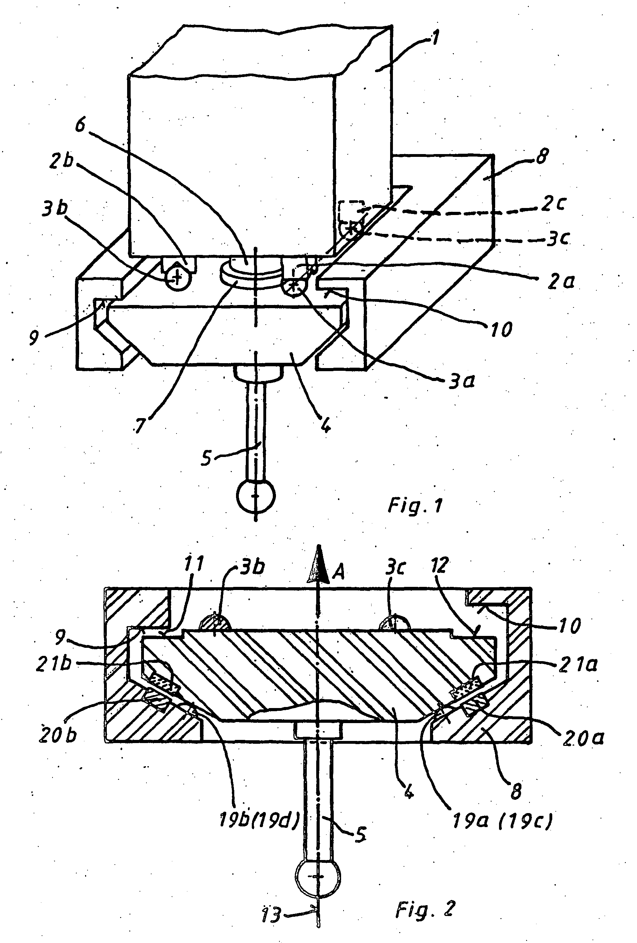

Fig. 1 zeigt einen Tastkopf (1), der Lager (2a, 2b, 2c) aufweist. An einer Taststiftaufnahme (4) sind Gegenlager (3a, 3b, 3c) angeordnet, die in die Lager (2a, 2b, 2c) greifen. An der Taststiftaufnahme (4) ist ein Taststift (5) befestigt. Der Taststift (5) ist in der Taststiftaufnahme (4) eingeschraubt.

Der Tastkopf (1) weist einen Permanentmagneten (6) auf. Die Taststiftaufnahme (4) weist ein entsprechendes Gegenstück (7) aus entsprechenden Materialien auf, die von dem Magneten (6) des Tastkopfes (1) angezogen werden. Wird die Taststiftaufnahme (4) nahe genug an den Tastkopf (1) herangebracht, so wirkt die Kraft des Magneten (6) auf die Taststiftaufnahme (4) und zieht die Taststiftaufnahme (4) in die Lager (2a, 2b, 2c) mit den Gegenlagern (3a, 3b, 3c). Der Tastkopf (1) und die Taststiftaufnahme (4) sind hierdurch verbunden.

Wie in Fig. 1 dargestellt, ist die Taststiftaufnahme (4) in einer Haltevorrichtung (8) angeordnet. Die Haltevorrichtung (8) weist zwei Abreißflächen (9, 10) auf.

Wie in Fig. 2 dargestellt, weisen die Abreißflächen (9, 10) in Richtung des Pfeiles (A) unterschiedliche Höhen auf.

Der Pfeil (A) gibt die Bewegungsrichtung des Tastkopfes (1) (in Fig. 2 nicht dargestellt) an, da zum Lösen der Taststiftaufnahme (4) von dem Tastkopf (1) der Tastkopf (1) in Richtung des Pfeiles (A) bewegt wird. Die Taststiftaufnahme (4) bewegt sich in Richtung des Pfeiles (A) mit, bis eine erste Teilfläche (11) der Taststiftaufnahme (4) an der Abreißfläche (9) anliegt. Bei der weiteren Bewegung des Tastkopfes (1) in Richtung des Pfeiles (A) verkippt die Taststiftaufnahme (4), bis eine zweite Teilfläche (12) der Taststiftaufnahme (4) an der Abreißfläche (10) zum Anliegen kommt. Der Tastkopf (1) wird weiter in Richtung des Pfeiles (A) bewegt. Da die Taststiftaufnahme (4) gegenüber dem Tastkopf (1) verkippt ist, ist die Kraft zum Lösen der Taststiftaufnahme (4) von dem Tastkopf (1) wesentlich geringer als bei einem unverkippten Abreißen.

Die Haltevorrichtung (8) weist Auflagepunkte (19a, 19b, 19c, 19d) für die Taststiftaufnahme (4) auf. Um einen sicheren Sitz zu gewährleisten und Verschiebungen bei hohen Tasterdrehmomenten zu verhindern, wird die Taststiftaufnahme (4) in der Haltevorrichtung (8) mit Permanentmagneten (20a, 20b) gehalten. Gegenstücke (21a, 21b) sind in der Taststiftaufnahme angeordnet. Damit ist sichergestellt, dass die Taststiftaufnahme (4) beim erneuten Einwechseln in den Tastkopf (1) an der gleichen Stelle in der Haltevorrichtung (8) liegt und sicher in die Lager (2a, 2b, 2c) eingesetzt werden kann.

Auch diese magnetischen Verbindungen (20a, 20b, 20c, 21a, 21b, 21c) können leicht durch Abreißen gelöst werden, wenn die Taststiftaufnahme (4) in den Tastkopf (1) eingewechselt wird. Die Kräfte dieser magnetischen Verbindung müssen immer kleiner als die Haltekräfte der Taststiftaufnahme (4) am Tastkopf (1) sein.

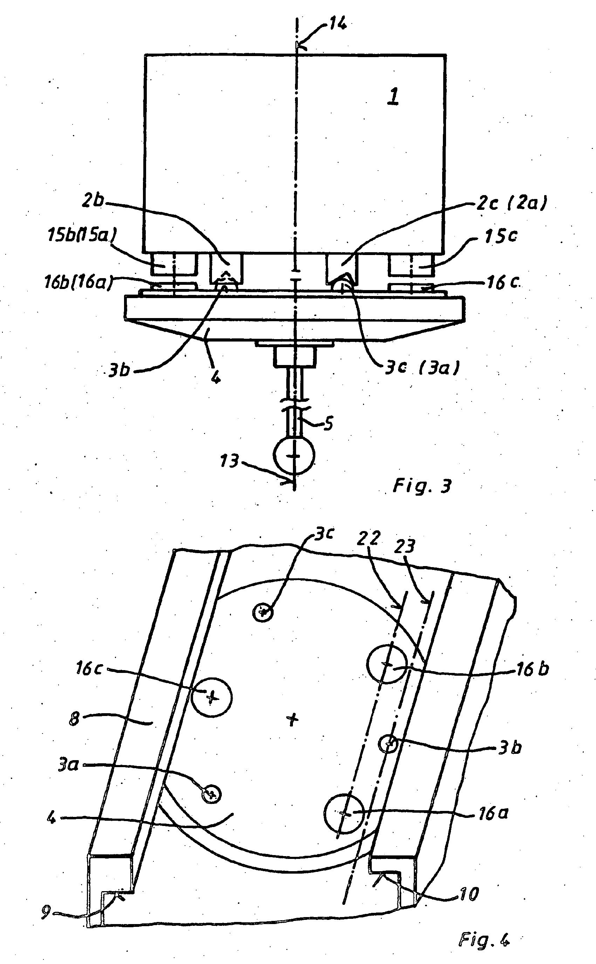

Gemäß Fig. 3 ist die mechanische Verbindung zwischen dem Tastkopf (1) und der Taststiftaufnahme (4) mittels mehrerer Permanentmagnete (15a, 15b, 15c) realisiert. An der Taststiftaufnahme (4) sind entsprechende Gegenstücke (16a, 16b, 16c) angeordnet.

Da es sich bei der Lagerung (2a, 2b, 2c, 3a, 3b, 3c) um eine Dreipunktlagerung handelt, sind vorzugsweise ebenfalls drei Magnete (15a, 15b, 15c) vorgesehen.

Der Kernpunkt der Erfindung besteht darin, dass eine Symmetrieachse (13) der Taststiftaufnahme (4) gegenüber einer Symmetrieachse (14) des Tastkopfes (1) verkippt wird, um die Taststiftaufnahme (4) von dem Tastkopf (1) zu lösen.

Fig. 4 zeigt die Haltevorrichtung (8) mit der Taststiftaufnahme (4). Die Taststiftaufnahme (4) weist die drei Gegenlager (3a, 3b, 3c) sowie die Haltemagnete (16a, 16b, 16c) auf. Die Taststiftaufnahme (4) ist vorteilhaft derart in der Haltevorrichtung (8) angeordnet, dass auf der Seite der höher gelegenen Abreißfläche (10) die Haltemagnete (16a, 16b) angeordnet sind. Durch diese Anordnung wird zunächst lediglich der Magnet (16c) von seinem gegenüberliegendem Bauteil (nicht dargestellt) entfernt, weil die beiden anderen Haltemagnete (16a, 16b) derart angeordnet sind, dass eine gedachte Verbindungslinie (22) zwischen ihnen so zwischen dem ersten Magneten (16c) und einer Kippachse (23) liegt, dass die Entfernung zwischen dem ersten Magneten (16c) und der gedachten Verbindungslinie (22) zwischen den beiden anderen Magneten (16a, 16b) größer ist als die Entfernung zwischen der gedachten Verbindungslinie (22) zwischen den beiden anderen Magneten (16a, 16b) und der Kippachse (23), was dazu führt, dass dieses Entfernungsverhältnis wie eine Hebelübersetzung wirkt.

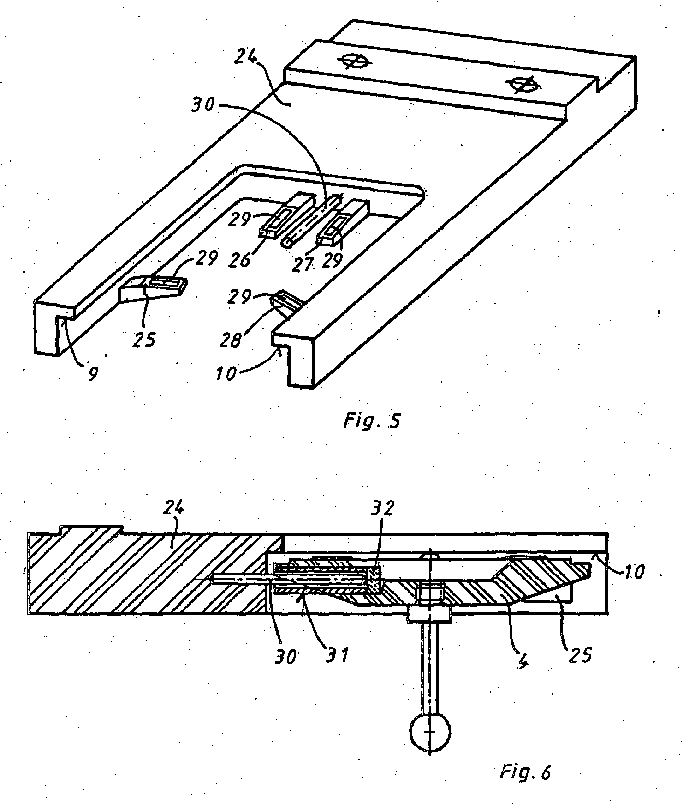

Fig. 5 zeigt eine Haltevorrichtung (24) mit den Abreißflächen (9, 10). Die Haltevorrichtung (24) weist Auflageflächen (25, 26, 27, 28) auf, auf denen die Taststiftaufnahme (4) (nicht dargestellt) abgelegt wird. Die Auflageflächen (25, 26, 27, 28) weisen eine reibungserhöhende Schicht (29) auf, damit die Taststiftaufnahme (4) einen möglichst festen Sitz in der Haltevorrichtung (24) erhält und nicht so leicht verrutscht. Die Haltevorrichtung (24) weist einen Stift (30) auf.

Wie in Fig. 6 dargestellt, greift der Stift (30) in eine Hülse (31) der Taststiftaufnahme (4). In der Taststiftaufnahme (4) ist ein Magnet (32) angeordnet, der bewirkt, dass die Taststiftaufnahme (4) in einer vorgegebenen Position in der Haltevorrichtung (24) angeordnet bleibt. Die Hülse (31) ist derart ausgebildet, dass die Taststiftaufnahme (4) zumindest so viel Spiel hat, dass der beschriebene Abreißvorgang an den Abreißflächen (9, 10) durchführbar ist.

### Bezugszahlen

- 1: Tastkopf
- 2a, 2b, 2c: Lager
- 3a, 3b, 3c: Gegenlager
- 4: Taststiftaufnahme
- 5: Taststift
- 6: Permanentmagnet
- 7: Gegenstück zu Permanentmagnet (10)
- 8: Haltevorrichtung für Taststiftaufnahme (4)
- 9: Abreißfläche
- 10: Abreißfläche
- 11: Teilfläche der Taststiftaufnahme (4)
- 12: Teilfläche der Tasteraufnahme (4)
- 13: Symmetrieachse der Taststiftaufnahme (4)
- 14: Symmetrieachse des Tastkopfes (1)
- 15a, 15b, 15c: Permanentmagnete
- 16a, 16b, 16c: Gegenstücke zu den Permanentmagneten (15a, 15b, 15c)
- 19a, 19b, 19c, 19d: Auflagepunkte
- 20a, 20b: Permanentmagnete
- 21a, 21b: Gegenstücke zu den Permanentmagneten (20a, 20b)
- 22: gedachte Verbindungslinie zwischen den Haltemagneten (16a, 16b)
- 23: Kippachse
- 24: Haltevorrichtung
- 25, 26, 27, 28: Auflagen
- 29: reibungserhöhende Schicht
- 30: Stift
- 31: Hülse
- 32: Magnet
- A: Pfeil

## Patentansprüche

1. Verfahren zum Trennen der mechanischen Verbindung zwischen einem Tastkopf und einer Taststiftaufnahme zum Zwecke des automatischen Wechsels einer Tasterkombination, wobei die Haltekraft, die die Taststiftaufnahme mit dem Tastkopf verbindet, durch wenigstens einen Magneten gebildet wird, bei dem beim Trennen der Taststiftaufnahme (4) vom Tastkopf (1) eine Symmetrieachse (13) der Taststiftaufnahme (4) und eine Symmetrieachse (14) des Tastkopfes (1) gegeneinander verkippt werden, bei dem das Verkippen der Symmetrieachsen (13, 14) gegeneinander beim Ablegen der Taststiftaufnahme (4) in einer Haltevorrichtung (8, 24) für die Taststiftaufnahme (4) durchgeführt wird, bei dem die Taststiftaufnahme (4) in der Haltevorrichtung (8, 24) für die Taststiftaufnahme (4) angeordnet wird, bei dem der Tastkopf (1) parallel oder annähernd parallel zu der Symmetrieachse (13) der Taststiftaufnahme (4) von der Haltevorrichtung (8, 24) wegbewegt wird,
**dadurch gekennzeichnet, dass** die Taststiftaufnahme (4) an einem ersten Anschlagpunkt und/oder einer ersten Anschlagkante und/oder einer ersten Anschlagfläche (9) anschlägt, dass der Tastkopf (1) in der ursprünglichen Bewegungsrichtung (A) weiterbewegt wird, dass eine freie Seite (12) der Taststiftaufnahme (4) sich mit dem Tastkopf (1) zunächst mitbewegt, dass die freie Seite (12) der Taststiftaufnahme (4) an einem zweiten Anschlagpunkt und/oder einer zweiten Anschlagkante und/oder einer zweiten Anschlagfläche (10) anschlägt, nachdem der Tastkopf eine vorbestimmte Strecke bewegt wurde, und dass sich die Taststiftaufnahme (4) und der Tastkopf (1) voneinander lösen.

2. Verfahren nach Anspruch 1, **dadurch gekennzeichnet, dass** die Haltekraft, die die Taststiftaufnahme (4) mit dem Tastkopf (1) verbindet, von drei Magneten (16a, 16b, 16c) aufgebracht wird, die an der mechanischen Verbindung zwischen dem Tastkopf (1) und der Taststiftaufnahme (4) so angeordnet sind, dass die gedachte Verbindungslinie (22) zwischen zwei von ihnen beim Verkippen der Symmetrieachsen von dem Tastkopf (1) und der Taststiftaufnahme (4) wenigstens annähernd parallel zur Kippachse (23) so zwischen dem ersten Magneten (16c) und der Kippachse (23) liegt, dass die Entfernung zwischen der genannten gedachten Verbindungslinie (22) und dem ersten Magneten (16c) groß gegenüber der Entfernung zwischen der genannten gedachten Verbindungslinie (22) und der Kippachse (23) ist, und dass die Kipprichtung so gewählt wird, dass zunächst der erste Magnet (16c) sich von seinem Gegenstück (15c) entfernt.

3. Haltevorrichtung zum Trennen der mechanischen Verbindung zwischen einem Tastkopf und einer Taststiftaufnahme zum Zwecke des automatischen Tasterwechsels, wobei die Haltekraft, die die Taststiftaufnahme mit dem Tastkopf verbindet, durch wenigstens einen Magneten gebildet wird, **dadurch gekennzeichnet, dass** die Haltevorrichtung (8, 24) als eine die Taststiftaufnahme (4) aufnehmende Haltevorrichtung (8) ausgebildet ist, und dass die Haltevorrichtung (8, 24) wenigstens zwei Anschlagpunkte und/oder -kanten und/oder -flächen (9, 10) für Teilflächen (11, 12) der Taststiftaufnahme (4) aufweist, die in Richtung der Symmetrieachse (13) der Taststiftaufnahme (4) unterschiedliche Höhen aufweisen.

4. Haltevorrichtung nach Anspruch 3, **dadurch gekennzeichnet, dass** die Haltekraft, die die Taststiftaufnahme (4) mit dem Tastkopf (1) verbindet, von drei Magneten (16a, 16b, 16c) aufgebracht wird, die an der mechanischen Verbindung zwischen dem Tastkopf (1) und der Taststiftaufnahme (4) so angeordnet sind, dass eine gedachte Verbindungslinie (22) zwischen zwei Magneten (16a, 16b) beim Verkippen der Symmetrieachsen von dem Tastkopf (1) und der Taststiftaufnahme (4) wenigstens annähernd parallel zu einer Kippachse (23) so zwischen dem ersten Magneten (16c) und der Kippachse (23) liegt, dass die Entfernung zwischen der genannten gedachten Verbindungslinie (22) und dem ersten Magneten (16c) groß gegenüber der Entfernung zwischen der genannten gedachten Verbindungslinie (22) und der Kippachse (23) ist, und dass der erste Magnet (16c) auf der Seite angeordnet ist, deren Anschlagpunkte und/oder -kanten und/oder -flächen (9) bei der Durchführung des Trennvorganges als erste mit der Taststiftaufnahme (4) in Wechselwirkung treten.

5. Haltevorrichtung nach Anspruch 3 oder 4, **dadurch gekennzeichnet, dass** die wenigstens zwei Anschlagpunkte und/oder -kanten und/oder -flächen (9,10) diametral gegenüberliegend in der Haltevorrichtung (8, 24) für die Taststiftaufnahme (4) angeordnet sind.

6. Haltevorrichtung nach einem der Ansprüche 3 bis 5, **dadurch gekennzeichnet, dass** in der Haltevorrichtung (8) wenigstens ein Auflagepunkt (19a, 19b, 19c, 19d) für die Taststiftaufnahme (4) vorgesehen ist.

7. Haltevorrichtung nach einem der Ansprüche 3 bis 6, **dadurch gekennzeichnet, dass** in der Haltevorrichtung (8) und/oder der Taststiftaufnahme (4) wenigstens ein Magnet (20a, 20b) für die Fixierung der Taststiftaufnahme (4) in der Haltevorrichtung (8) angeordnet ist.

8. Haltevorrichtung nach Anspruch 7, **dadurch gekennzeichnet, dass** der wenigstens eine Magnet (20a, 20b) als Permanentmagnet ausgebildet ist.

9. Haltevorrichtung nach einem der Ansprüche 3 bis 6, **dadurch gekennzeichnet, dass** an der Haltevorrichtung (24) für die Taststiftaufnahme (4) ein Stift (30) angeordnet ist, der beim Ablegen der Taststiftaufnahme (4) in der Haltevorrichtung (24) in eine in der Taststiftaufnahme (4) angeordnete Hülse (31) eintaucht.

10. Haltevorrichtung nach Anspruch 9, **dadurch gekennzeichnet, dass** der Stift (30) aus ferromagnetischem Material besteht, und dass am Ende der Hülse (31) wenigstens ein Magnet (32) angeordnet ist, der auf den Stift (30) eine anziehende Kraft ausübt, wenn die Taststiftaufnahme (4) in der Haltevorrichtung (24) abgelegt ist.

11. Haltevorrichtung nach einem der Ansprüche 3 bis 10, **dadurch gekennzeichnet, dass** auf Auflageflächen (25 bis 28) der Haltevorrichtung (24) eine reibungserhöhende Schicht (29) angeordnet ist.

## Claims

1. Method for breaking the mechanical connection between a scanning head and a stylus retainer so as to automatically change a stylus combination, the retaining force which connects the stylus retainer to the scanning head being produced by at least one magnet, an axis of symmetry (13) of the stylus retainer (4) and an axis of symmetry (14) of the scanning head (1) being tilted away from one another when separating the stylus retainer (4) from the scanning head (1), the axes of symmetry (13, 14) being tilted away from one another when the stylus retainer (4) is arranged in a holding device (8, 24) for the stylus retainer (4), the stylus retainer (4) being arranged in the holding device (8, 24) for the stylus retainer (4), the scanning head (1) being moved away from the holding device (8, 24) parallel or approximately parallel to the axis of symmetry (13) of the stylus retainer (4), **characterised in that** the stylus retainer (4) abuts a first contact point and/or a first contact edge and/or a first contact face (9), **in that** the scanning head (1) is further displaced in the original direction of movement (A), **in that** a free side (12) of the stylus retainer (4) is initially displaced together with the scanning head (1), **in that** the free side (12) of the stylus retainer (4) abuts a second contact point and/or a second contact edge and/or a second contact face (10) once the scanning head has been displaced over a pre-determined distance, and **in that** the stylus retainer (4) and the scanning head (1) are disconnected from one another.

2. Method according to claim 1, **characterised in that** the retaining force which connects the stylus retainer (4) to the scanning head (1) is produced by three magnets (16a, 16b, 16c) which are arranged at the mechanical connection between the scanning head (1) and the stylus retainer (4) in such a way that the imaginary connecting line (22) between two of said magnets is arranged so as to lie between the first magnet (16c) and the tilting axis (23), at least approximately parallel to the tilting axis (23), when the axes of symmetry of the scanning head (1) and the stylus retainer (4) are tilted, in such a way that the distance between said imaginary connecting line (22) and the first magnet (16c) is relatively large compared with the distance between said imaginary connecting line (22) and the tilting axis (23), and **in that** the tilting direction is selected in such a way that the first magnet (16c) is initially distanced from its counterpart (15c).

3. Holding device for breaking the mechanical connection between a scanning head and a stylus retainer so as to automatically change the stylus, the retaining force which connects the stylus retainer to the scanning head being produced by at least one magnet, **characterised in that** the holding device (8, 24) is configured as a holding device (8) which receives the stylus retainer (4), and **in that** the holding device (8, 24) comprises at least two contact points and/or contact edges and/or contact faces (9, 10) for some faces (11, 12) of the stylus retainer (4) which are of different heights in the direction of the axis of symmetry (13) of the stylus retainer (4).

4. Holding device according to claim 3, **characterised in that** the retaining force which connects the stylus retainer (4) to the scanning head (1) is produced by three magnets (16a, 16b, 16c) which are arranged at the mechanical connection between the scanning head (1) and the stylus retainer (4) in such a way that an imaginary connecting line (22) between two magnets (16a, 16b) is arranged so as to lie between the first magnet (16c) and the tilting axis (23), at least approximately parallel to a tilting axis (23), when the axes of symmetry of the scanning head (1) and the stylus retainer (4) are tilted, in such a way that the distance between said imaginary connecting line (22) and the first magnet (16c) is relatively large compared with the distance between said imaginary connecting line (22) and the tilting axis (23), and **in that** the first magnet (16c) is arranged on the side of which the contact points and/or contact edges and/or contact faces (9) first interact with the stylus retainer (4) when the separation process is carried out.

5. Holding device according to either claim 3 or claim 4, **characterised in that** the at least two contact points and/or contact edges and/or contact faces (9, 10) arc arranged so as to be diametrically opposed in the holding device (8, 24) for the stylus retainer (4).

6. Holding device according to any one of claims 3 to 5, **characterised in that** at least one support point (19a, 19b, 19c, 19d) for the stylus retainer (4) is provided in the holding device (8).

7. Holding device according to any one of claims 3 to 6, **characterised in that** at least one magnet (20a, 20b) for fixing the stylus retainer (4) in the holding device (8) is arranged in the holding device (8) and/or in the stylus retainer (4).

8. Holding device according to claim 7, **characterised in that** the at least one magnet (20a, 20b) is configured as a permanent magnet.

9. Holding device according to any one of claims 3 to 6, **characterised in that** a pin (30) is arranged on the holding device (24) for the stylus retainer (4), which pin is inserted into a sleeve (31) arranged in the stylus retainer (4) when the stylus retainer (4) is arranged in the holding device (24).

10. Holding device according to claim 9, **characterised in that** the pin (30) is made of ferromagnetic material, and **in that** at the end of the sleeve (31) at least one magnet (32) is arranged which effects a force of attraction on the pin (30) when the stylus retainer (4) is arranged in the holding device (24).

11. Holding device according to any one of claims 3 to 10, **characterised in that** a friction-enhancing layer (29) is arranged on support faces (25 to 28) of the holding device (24).

## Revendications

1. Procédé pour séparer la liaison mécanique entre une tête de palpeur et un logement de palpeur pour le remplacement automatique d'une combinaison de palpeur, dans lequel la force de retenue, qui relie le logement de palpeur et la tête de palpeur est créée par au moins un aimant, un axe de symétrie (13) du logement de palpeur (4) et un axe de symétrie (14) de la tête de palpeur (1) étant inclinés l'un par rapport à l'autre en cas de séparation du logement de palpeur (4), de la tête de palpeur (1), l'inclinaison des axes de symétrie (13, 14) l'un par rapport à l'autre étant réalisée en cas de dépose du logement de palpeur (4) dans un dispositif de retenue (8, 24) pour le logement de palpeur (4), le logement de palpeur (4) étant disposé dans le dispositif de retenue (8, 24) pour le logement de palpeur (4), la tête de palpeur (1) étant éloignée du dispositif de retenue (8, 24) parallèlement ou approximativement parallèlement à l'axe de symétrie (13) du logement de palpeur (4),
**caractérisé en ce que** le logement de palpeur (4) vient en butée au niveau d'un premier point de butée et/ou d'un premier bord de butée et/ou d'une première surface de butée (9), **en ce que** la tête de palpeur (1) est déplacée de nouveau dans la direction de déplacement d'origine (A), **en ce qu'**un côté libre (12) du logement de palpeur (4) se déplace tout d'abord avec la tête de palpeur (1), **en ce que** le côté libre (12) du logement de palpeur (4) vient en butée au niveau d'un deuxième point de butée et/ou d'un deuxième bord de butée et/ou d'une deuxième surface de butée (10), après que la tête de palpeur ait été déplacé sur une distance prédéterminée, et **en ce que** le logement de palpeur (4) et la tête de palpeur (1) se séparent l'un de l'autre.

2. Procédé selon la revendication 1, **caractérisé en ce que** la force de retenue, qui relie le logement de palpeur (4) avec la tête de palpeur (1) est appliquée au moyen de trois aimants (16a, 16b, 16c), qui sont disposés au niveau de la liaison mécanique entre la tête de palpeur (1) et le logement de palpeur (4) de sorte que la ligne imaginaire de liaison (22) entre deux d'entre eux soit située, en cas d'inclinaison des axes de symétrie de la tête de palpeur (1) et du logement de palpeur (4), au moins approximativement parallèlement à l'axe d'inclinaison (23), entre le premier aimant (16c) et l'axe d'inclinaison (23) de sorte que la distance entre ladite ligne imaginaire de liaison (22) et le premier aimant (16c) est importante par rapport à la distance entre ladite ligne imaginaire de liaison (22) et l'axe d'inclinaison (23), et **en ce que** la direction d'inclinaison est choisie de sorte que tout d'abord, le premier aimant (16c) s'éloigne de son pôle opposé (15c).

3. Dispositif de retenue pour la séparation de la liaison mécanique entre une tête de palpeur et un logement de palpeur en vue du changement automatique du palpeur, dans lequel la force de retenue qui relie le logement de palpeur à la tête de palpeur est créée par au moins un aimant, **caractérisé en ce que** le dispositif de retenue (8, 24) est réalisé sous forme d'un dispositif de retenue (8) qui reçoit le logement de palpeur (4), et **en ce que** le dispositif de retenue (8, 24) présente au moins deux points de butée et/ou bords de butée et/ou surfaces de butée (9, 10) pour des surfaces partielles (11, 12) du logement de palpeur (4), qui présentent des hauteurs différentes dans la direction de l'axe de symétrie (13) du logement de palpeur (4).

4. Dispositif de retenue selon la revendication 3, **caractérisé en ce que** la force de retenue, qui relie le logement de palpeur (4) avec la tête de palpeur (1) est appliquée au moyen de trois aimants (16a, 16b, 16c), qui sont disposés au niveau de la liaison mécanique entre la tête de palpeur (1) et le logement de palpeur (4) de sorte que la ligne imaginaire de liaison (22) entre deux d'entre eux soit située, en cas d'inclinaison des axes de symétrie de la tête de palpeur (1) et du logement de palpeur (4) au moins approximativement parallèlement à l'axe d'inclinaison (23), entre le premier aimant (16c) et l'axe d'inclinaison (23), de sorte que la distance entre ladite ligne imaginaire de liaison (22) et le premier aimant (16c) est importante par rapport à la distance entre ladite ligne imaginaire de liaison (22) et l'axe d'inclinaison (23), et **en ce que** le premier aimant (16c) est disposé du côté dont le point de butée et/ou le bord de butée et/ou la surface de butée (9) coopère en premier, lors de la réalisation de l'acte de séparation, avec le logement de palpeur (4).

5. Dispositif de retenue selon la revendication 3 ou 4, **caractérisé en ce que** les au moins deux points de butée et/ou bords de butée et/ou surfaces de butée (9, 10) sont disposés diamétralement l'un en face de l'autre dans le dispositif de retenue (8, 24) pour le logement de palpeur (4).

6. Dispositif de retenue selon l'une des revendications 3 à 5, **caractérisé en ce que** dans le dispositif de retenue (8) il est prévu au moins un point d'appui (19a, 19b, 19c, 19d) pour le logement de palpeur (4).

7. Dispositif de retenue selon l'une des revendications 3 à 6, **caractérisé en ce que**, dans le dispositif de retenue (8) et/ou dans le logement de palpeur (4) est disposé au moins un aimant (20a, 20b) pour la fixation du logement de palpeur (4) dans le dispositif de retenue (8).

8. Dispositif de retenue selon la revendication 7, **caractérisé en ce que** le au moins un aimant (20a, 20b) est réalisé sous forme d'un aimant permanent.

9. Dispositif de retenue selon l'une des revendications 3 à 6, **caractérisé en ce que** dans le dispositif de retenue (24) pour le logement de palpeur (4) est disposée une broche (30) qui, en cas de dépose du logement de palpeur (4) dans le dispositif de retenue (24), s'enfonce dans une douille (31) agencée dans le logement de palpeur (4).

10. Dispositif de retenue selon la revendication 9, **caractérisé en ce que** la broche (30) est composée de matériau ferromagnétique et **en ce que**, au moins un aimant (32) est disposé à l'extrémité de la douille (31) qui exerce une force d'attraction sur la broche (30) lorsque le logement de palpeur (4) est disposé dans le dispositif de retenue (24).

11. Dispositif de retenue selon l'une des revendications 3 à 10, **caractérisé en ce qu'**une couche destinée à augmenter la friction (29) est disposée sur des surfaces d'appui (25 à 28) du dispositif de retenue (24).
